**Europäisches Patentamt**

**European Patent Office**

**Office européen des brevets**

(19)

(11) Publication number : **0 364 578 B1**

(12)

# EUROPEAN PATENT SPECIFICATION

(45) Date of publication of patent specification :
**29.07.92 Bulletin 92/31**

(51) Int. Cl.⁵ : **F27D 21/02**

(21) Application number : **88903351.0**

(22) Date of filing : **06.04.88**

(86) International application number :
**PCT/JP88/00345**

(87) International publication number :
**WO 89/09918 19.10.89 Gazette 89/25**

(54) INSPECTION APPARATUS FOR HOT FURNACE.

(43) Date of publication of application :
**25.04.90 Bulletin 90/17**

(45) Publication of the grant of the patent :
**29.07.92 Bulletin 92/31**

(84) Designated Contracting States :
**DE FR GB**

(56) References cited :
**FR-A- 2 102 259
JP-A-61 114 085
JP-A-63 122 933
JP-U- 5 435 463
JP-U- 5 980 445
US-A- 3 656 471**

(73) Proprietor : **SHINAGAWA REFRACTORIES
CO., LTD.
2-1, Ohtemachi 2-chome Chiyoda-ku
Tokyo 100 (JP)**

(72) Inventor : **YORITA, Eiichi
312-04, Yamasaki Okayama-shi
Okayama 703 (JP)**
Inventor : **YAMAMURA, Takashi
700-121, Shinogoze Okayama-shi
Okayama 703 (JP)**
Inventor : **NONAKA, Shingo
6-29-25, Sakuragaoka-Nishi Sanyo-cho
Akaiwa-gun Okayama 709-08 (JP)**
Inventor : **KAWANO, Kazuo
554, Kagatomoto
Bizen-shi Okayama 705 (JP)**

(74) Representative : **Dixon, Donald Cossar et al
Gee & Co. Chancery House Chancery Lane
London WC2A 1QU (GB)**

## Description

## BACKGROUND OF THE INVENTION

### FIELD OF THE INVENTION

This invention relates to an apparatus for observing the refractories of a furnace or the like, such as a coke oven, blast furnace, metal mixer, melting pot, converter, or vacuum degasifier, with a view to examining them for wear or damage.

### DESCRIPTION OF THE RELATED ART

Generally, the refractory lining of a furnace or the like, such as a coke furnace, blast furnace, metal mixer, melting pot, converter, or vacuum degasifier, is gradually worn away during operation. Hence the necessity for the refractories to be observed to monitor the wear or damage before they become so thin that they can no longer stand operation.

Conventionally, the degree of wear or damage the refractories of a hot furnace have been determined with an apparatus having a camera of a double-water-cooling structure in which cooling air is blown into the camera chamber.

However, in the conventional observing apparatus, equipped with a camera having a double-water-cooling structure in which cooling air is simply blown into the camera chamber, the interior of the camera can suffer damage due to the radiation entering the apparatus and heating it through the glass window thereof when used in a space at a high temperature of 900°C or more. In addition, the automatic diaphragm of commercial cameras only provides a narrow permissible temperature range of 900 to 1200°C, so that observation cannot be performed to a satisfactory degree.

### SUMMARY OF THE INVENTION

This invention has been made with a view to eliminating the above problems experienced with conventional apparatuses. It is accordingly the object of this invention to provide an apparatus for observing the interior of a hot furnace which employs a commercial TV camera capable of remote control of zooming and focusing and in which damage to the camera due to the radiation heat entering through the glass window is avoided, thereby making it possible to conduct observation in a temperature range of from room temperature to 1200°C.

To achieve this object, this invention provides an apparatus for observing the interior of a hot furnace. The apparatus is equipped with a camera arranged in a case whose inner surface is cooled by means of cooling water and into whose inner space cooling air is blown, the apparatus comprising: a quartz-glass plate, a heat-ray-reflecting-glass plate, a heat-ray-absorbing-glass plate, and a heat-ray-transmitting mirror arranged in order of decreasing distance to the camera in an optical path through which a ray of light entering at the front surface of the case is led to the camera; and an illuminating lamp which is provided on the front surface of the case and whose luminance can be remote-controlled.

As stated above, the hot-furnace-interior observing apparatus of this invention, which is equipped with a camera arranged in a case whose inner periphery is cooled by means of cooling water and into whose inner space cooling air is blown, comprises: a quartz-glass plate, a heat-ray-reflecting-glass plate, a heat-ray-absorbing-glass plate, and a heat-ray-transmitting mirror that are arranged in order of decreasing distance to the camera in the optical path through which the ray of light entering at the front surface of the case is led to the camera; and an illuminating lamp which is arranged on the front surface of the case and whose luminance can be remote-controlled. With this construction, the temperature in the case can be kept at 50°C or less, damage to the camera due to the radiation heat entering through the glass window can be avoided, and the interior of a hot furnace can be observed over a temperature range of room temperature to 1200°C while remote-controlling the luminance of the illuminating lamp.

### BRIEF DESCRIPTION OF THE DRAWINGS

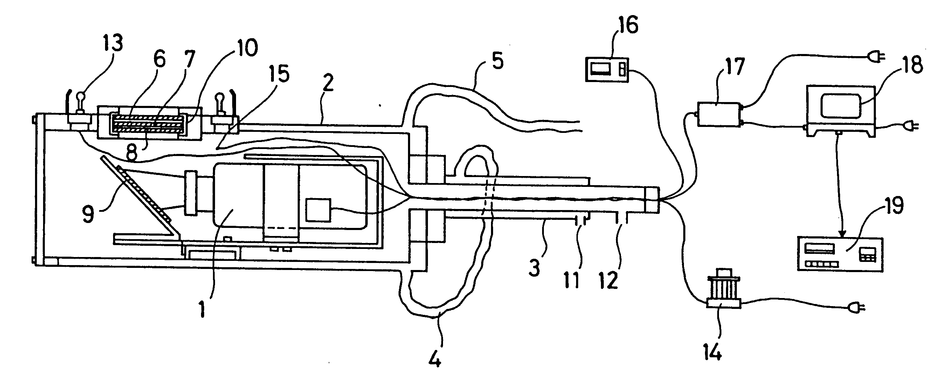

The attached drawing is a diagram showing an embodiment of a hot-furnace-interior observing apparatus in accordance with this invention.

### DETAILED DESCRIPTION OF THE PREFERRED EMBODIMENT

An embodiment of this invention will now be described with reference to the attached drawing.

The embodiment of the hot-furnace-interior observing apparatus shown includes a video camera 1, a video-camera case 2, a camera-case supporting pipe 3, a water hose 4, a water discharge hose 5, a quartz-glass plate 6, a heat-ray-reflecting-glass plate 7, a heat-ray-absorbing-glass plate 8, a heat-ray-transmitting mirror 9, a cooling-air passing slit 10, a cooling-water inlet 11, a compressed-air inlet 12, an illuminating lamp 13, a luminance adjusting transformer 14, a temperature sensor 15, a temperature indicator 16, a remote-control box 17, a monitor-television set 18, and a recorder 19.

In the apparatus shown, cooling water enters at the cooling-water inlet 11 and cools the supporting pipe 3. It then passes through the water hose 4 and flows into the video-camera case 2, thereby cooling the case. The water is then discharged to the exterior through the water discharge hose 5.

Cooling air enters the apparatus at the compressed-air inlet 12 and cools the interior of the camera case 2 before being discharged to the exterior through the slit 10 provided around the glass system composed of the quartz-glass plate, the heat-ray-reflecting-glass plate, and the heat-ray-absorbing-glass plate. These glass plates are arranged in order from the exterior thus: the quartz-glass plate 6, the heat-ray-reflecting-glass plate 7, and the heat-ray-absorbing-glass plate 8. Provided between adjacent glass plates are clearances of about 2mm, through which the cooling air is allowed to flow, thereby effectively cooling the glass plates.

A ray of light entering the apparatus first passes through the quartz-glass plate 6, and up to about 98% of the long-wave light-ray component having a wavelength ranging from 800nm (nm = 1/1000μm) to 900nm is reflected by the heat-ray-reflecting-glass plate 7. Of the portion of the ray of light which is allowed to reach the heat-ray-absorbing-glass plate 8, about 97% of the components thereof having a wavelength of 90nm or more are either reflected or absorbed. As for the portion of light rays which is allowed to pass through the heat-ray-absorbing-glass plate 8, those components having a long wavelength are transmitted through the heat-ray-transmitting mirror 9, thus allowing only the visible rays to be reflected by the mirror to reach the video camera 1. The image thus observed is displayed on the monitor-television set 18 and is recorded by the recorder 19 as needed. The zooming and focusing of the video camera 1 can be remote-controlled at will by manipulating a remote-control operation box 17.

The temperature in the case is measured by the sensor 15 and is constantly monitored through the temperature indicator 16. In addition to the cooling effect of the above-mentioned cooling water and air, the intrusion of heat radiation through the window is prevented to the utmost, thereby making it possible to keep the temperature in the case at 50°C or less, thus avoiding damage to the camera.

The built-in camera has an automatic-diaphragm function, the allowable temperature range of which is 900°C to 1200°C. In view of this, the illuminating lamp 13 is provided, and its luminance is adjusted by remote-controlling the voltage supply, thereby making it possible to extend the lower-temperature side of the allowable temperature range down to room temperature.

Thus, this invention makes it possible to keep the temperature in the camera case at 50°C or less, to avoid damage to the camera due to the radiation heat entering through the glass window, and to heighten the withstand temperature of the camera from the conventional 900°C to 1200°C. Furthermore, by remote controlling the luminance of the illuminating lamp, the interior of a hot furnace can be observed over a temperature range of room temperature to 1200°C.

As described above, the apparatus of this invention employs a commercial camera the zooming and focusing of which can be remote-controlled. This apparatus is free from damage to the camera due to the radiation heat entering through the glass window and is suited for observing the interior of a hot furnace over a temperature range of room temperature to 1200°C.

## Claims

1. An apparatus for observing the interior of a hot furnace that is equipped with a camera arranged in a case whose inner surface is cooled by means of cooling water and into whose inner space cooling air is blown, said apparatus comprising: a quartz-glass plate, a heat-ray-reflecting-glass plate, a heat-ray-absorbing-glass plate, and a heat-ray-transmitting mirror arranged in the order of decreasing distance to said camera in an optical path through which a ray of light entering at the front surface of said case is led to said camera; and an illuminating lamp which is provided on the front surface of said case and whose luminance can be remote-controlled.

2. An apparatus as claimed in Claim 1, wherein said quartz-glass plate, said heat-radiation-reflecting-glass plate, and said heat-radiation-absorbing-glass plate are arranged with small clearances between them, and wherein a cooling-air passing slit is provided around said glass plates, cooling air being allowed to flow through said clearances and to be discharged through said slit.

## Patentansprüche

1. Einrichtung zur Überwachung des Innenraums eines heißgehenden Ofens, bestehend aus einer in einem Gehäuse angeordneten Kamera, wobei die inneren Oberflächen des Gehäuses mit Kühlwasser gekühlt werden und Kühlluft in den Innenraum des Gehäuses geblasen wird, gekennzeichnet durch: Eine Quarzglasplatte, eine Hitzestrahlung reflektierende Glasplatte, eine Hitzestrahlung absorbierende Glasplatte und einen für Hitzestrahlung durchlässigen Spiegel, welche in dieser Reihenfolge mit abnehmender Entfernung zur Kamera auf einer optischen Achse angeordnet sind, entlang der ein an der Frontseite des Gehäuses einfallender Lichtstrahl zur Kamera geführt wird; und eine Lampe zur Ausleuchtung, die an der Frontseite des Gehäuses vorgesehen ist und deren Helligkeit ferngesteuert werden kann.

2. Einrichtung nach Anspruch 1, dadurch gekennzeichnet, daß die Quarzglasplatte, die Hitzestrahlung reflektierende Glasplatte und die Hitzestrahlung absorbierende Glasplatte mit geringen gegenseitigen Zwischenräumen angeordnet sind, wobei rund um diese Glasplatten ein Spalt zum Durchlassen von Kühlluft vorgesehen ist, so daß Kühlluft durch die Zwischenräume strömen und durch den Spalt entweichen kann.

**Revendications**

1. Dispositif pour observer l'intérieur d'un four chaud, qui est équipé d'une caméra disposée dans un carter dont la surface intérieure est refroidie par de l'eau de refroidissement et dans l'espace intérieur duquel on souffle de l'air de refroidissement, ce dispositif comprenant : une plaque de verre au quartz, une plaque de verre réfléchissant les rayons thermiques, une plaque de verre absorbant les rayons thermiques et un miroir transmettant les rayons thermiques, disposés dans l'ordre de la distance décroissante à la caméra sur un trajet optique que les rayons de lumière pénétrant au niveau de la surface frontale du carter suivent pour aller à la caméra, et une lampe d'éclairage qui est prévue sur la surface frontale du carter et dont la luminance peut être commandée à distance.

2. Dispositif selon la revendication 1, dans lequel la plaque de verre au quartz, la plaque de verre réfléchissant les rayons thermiques et la plaque de verre absorbant les rayons thermiques sont disposées avec de petits intervalles entre elles, et dans lequel une fente de passage de l'air de refroidissement est prévue autour des plaques de verre, l'air de refroidissement pouvant circuler à travers ces intervalles et être évacué à travers la fente.